# EUROPEAN PATENT SPECIFICATION

(11) **EP 1 818 243 B1**
(45) Date of publication and mention of the grant of the patent: **13.08.2008**
(21) Application number: 07002558.0
(22) Date of filing: 06.02.2007
(51) Int. Cl.: B62D 7/06, B62D 7/18

(54) **Steering apparatus for a vehicle**
Lenkeinrichtung für ein Fahrzeug
Appareil de direction pour véhicule

(30) Priority: 14.02.2006 JP 2006036930
(43) Date of publication of application: 15.08.2007
(73) Proprietor: TOYOTA JIDOSHA KABUSHIKI KAISHA, Toyota-shi, Aichi-ken, 471-8571 (JP)
(72) Inventor: Hasegawa, Akira, Toyota-shi, Aicih-ken, 471-8571 (JP); Kawakami, Hiroshi, Toyota-shi, Aicih-ken, 471-8571 (JP); Hayashi, Kenji, Toyota-shi, Aicih-ken, 471-8571 (JP)
(74) Representative: Winter, Brandl, Fürniss, Hübner Röss, Kaiser, Polte Partnerschaft Patent- und Rechtsanwaltskanzlei

(56) References cited:
- JP-A- 2005 053 471

## Description

### BACKGROUND OF THE INVENTION

### 1. Field of the Invention

The present invention relates to a steering apparatus for a vehicle having a mechanism that causes the swinging pivot point of a wheel support member forming a kingpin axis to move in the vehicle width direction.

### 2. Description of the Related Art

A known steering apparatus has a wheel and a knuckle that rotatably supports the wheel on the side of a vehicle, and the steering apparatus performs steering of the wheel by swinging the knuckle. There is a steering apparatus in which, when steering is performed the knuckle is pushed outward in the vehicle width direction so that it moves away from the side of the vehicle so as to turn the wheel (for example, refer to Japanese Patent Application Publication No. JP-A-2005-53471).

In the above-described steering apparatus, however, the configuration is such that the knuckle is pushed outward in the vehicle width direction by causing a link to swing in a prescribed direction. For this reason, depending upon the steering direction (outward turning or inward turning), there are cases in which the swinging direction of the link and the turning direction of the wheel are reverse directions. In this case, the tire turning angle becomes small, and there is a worsening of steering efficiency.

### SUMMARY OF THE INVENTION

The present invention has an object to provide a steering apparatus for a vehicle that is capable of achieving a turning angle characteristics with high steering efficiency, regardless of the steering direction.

A first aspect of the present invention relates to a steering apparatus for a vehicle that includes a wheel support member that rotatably supports a wheel, a steering mechanism that includes a tie rod linked to the wheel support member, and rotates the wheel support member around the first pivot point of the wheel support member that forms a kingpin axis, in association with the movement of the tie rod during steering. This steering apparatus for a vehicle is provided with a linear support mechanism that includes at least two members that are supported on the vehicle body, and supports the first pivot point so that it can move linearly or approximately linearly in the vehicle width direction or in a direction inclined in the longitudinal direction of the vehicle, and a first arm member, one end of which is swingably supported on the vehicle body, and the other end of which is swingably supported by the wheel support member at the outside of the first pivot point in the vehicle width direction, wherein the first arm member restricts the position of the wheel support member by the linear support mechanism, so that the first pivot point of the wheel support member, in association with the movement of the tie rod, moves linearly or approximately linearly, outward in the vehicle width direction.

In this steering apparatus for a vehicle, when the wheel support member is at the steering angle neutral condition, the first pivot point of the wheel support member may be set so that, when viewed from above the vehicle, the first pivot point is disposed on a straight line that is substantially the same as a straight line extending from the first arm member.

By doing this, because the difference in the movement mode of the first pivot point of the wheel support member due to a difference in the steering direction of the wheel is eliminated, it is possible to achieve a proper tire turning angle regardless of the steering direction.

In the above-described steering apparatus for a vehicle, the linear support mechanism may be formed by a first link member and a second link member, which are supported on the vehicle body, and a third link member that links the first link member and second link member, in which the first pivot point of the wheel support member is set on the third link member.

In the above-described steering apparatus for a vehicle, the linear support mechanism may includes a first link member and a second link member, which are supported on the vehicle body, and a third link member that links the first link member and the second link members, the first pivot point of the wheel support member being set on the third link member, and a second pivot point of the wheel support member being set on the first link member or on the second link member, wherein the wheel support member may have a first member that is supported so as to be swingable around the first pivot point and that rotatably supports the wheel, a second member that is supported so as to be swingable around the second pivot point and that swingably supports the other end of the first arm member at the outside of the second pivot point in the vehicle width direction, and a third member that links the first member and the second member.

In the above-described steering apparatus for a vehicle, the second pivot point, when viewed from above the vehicle, may be disposed on a straight line that is substantially the same as a straight line extending from the first arm member when the wheel support member is located at the steering angle neutral condition.

By doing this, because the difference in the movement of the first pivot point of the wheel support member due to a difference in the steering direction of the wheel is eliminated, it is possible to achieve a proper tire turning angle regardless of the steering direction.

In the above-described steering apparatus for a vehicle, in association with movement of the first pivot point of the wheel support member outward in the vehicle width direction, the inclination of the kingpin axis may be changed to the vertically standing direction. By doing this, it is possible to reduce the size of the caster trail when steering the wheels and to reduce the amount of force needed for steering.

In the above-described steering apparatus for a vehicle, the steering apparatus further includes a second arm member, one end of which is swingably supported on the vehicle body, and the other end of which is swingably linked to the wheel support member, and wherein a line joining the first pivot point of the wheel support member and the linking point of the other end of the second arm member establishes the kingpin axis, the second arm member may be disposed so that, in association with the movement of the first pivot point of the wheel support member, the inclination of the kingpin axis changes to the vertical standing direction.

According to the present invention, it is possible to obtain a steering apparatus for a vehicle capable of achieving turning angle characteristics with a high steering efficiency, without regard to the steering direction.

### BRIEF DESCRIPTION OF THE DRAWINGS

The foregoing and/or further objects, features, and advantages of the present invention will become more apparent from the following description of preferred embodiments, with reference to the accompanying drawings, in which like numerals are used to represent like elements, and wherein:
FIG. 1 is an oblique view showing a steering apparatus for a vehicle 100 according to a first embodiment of the present invention, in the condition in which the steering apparatus is applied to a vehicle having a strut-type suspension;
FIG. 2 is a plan view showing a simplified model of a linear support mechanism 300;
FIG. 3A to FIG. 3C are plan views of the steering apparatus 100 according to the first embodiment, in which FIG. 3A shows the condition of the right wheel when the steering angle is neutral, FIG. 3B shows the condition of the right wheel when turning right; and FIG. 3C shows the condition of the right wheel when turning left;
FIG. 4 is an oblique view showing a variation of the steering apparatus for a vehicle 100 according to the first embodiment;
FIG. 5 is an oblique view of the steering apparatus 101 for a vehicle according to a second embodiment of the present invention, in the condition in which the steering apparatus is applied to a vehicle having a double-wishbone suspension;
FIG. 6A and FIG. 6B are plan views showing the steering apparatus for a vehicle 101 according to the second embodiment, in which FIG. 6A shows the condition when the steering angle is neutral, and FIG.6B shows the condition when turning right;
FIG. 7 is an oblique view showing a steering apparatus 102 for a vehicle according to a third embodiment of the present invention, in the condition in which the steering apparatus is applied to a vehicle having a double-wishbone suspension;
FIG. 8A to FIG. 8C are plan views of the steering apparatus for a vehicle 102 according to the third embodiment, in which FIG. 8A shows the condition of the right wheel when the steering angle is neutral, FIG. 8B shows the condition of the right wheel when turning right; and FIG. 8C shows the condition of the right wheel when turning left;
FIG. 9 is a simplified plan view of a steering apparatus 103 for a vehicle according to a fourth embodiment of the present invention; and
FIG. 10A and FIG. 10B are plan views of the steering apparatus for a vehicle 103 according to the fourth embodiment, in which FIG. 10A shows the condition of the right wheel when turning left, and FIG. 10B shows the condition of the right wheel when turning right.

### DETAILED DESCRIPTION OF THE PREFERRED EMBODIMENTS

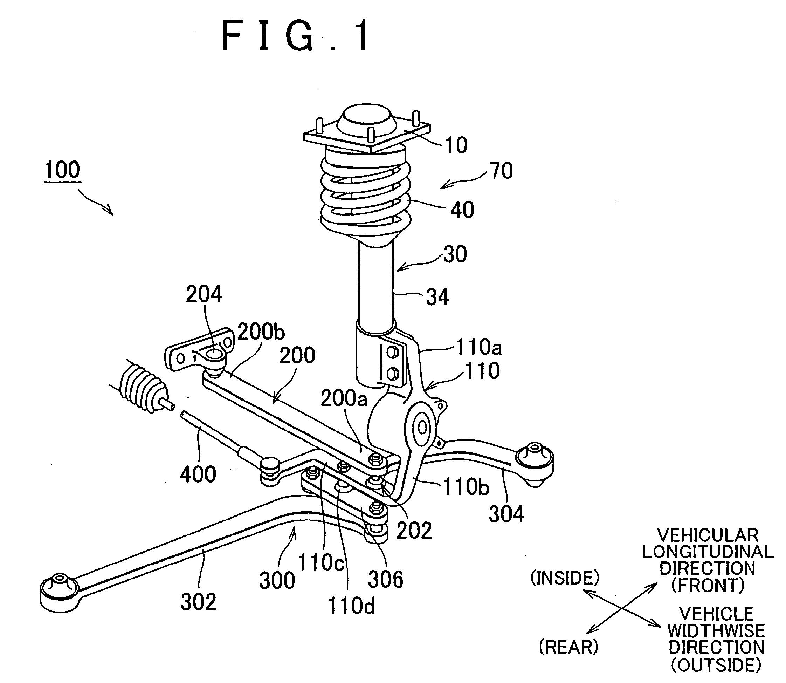

Preferred embodiments of the present invention are described below, with references made to the accompanying drawings. FIG. 1 is an oblique view showing a steering apparatus for a vehicle according to the first embodiment of the present invention, as seen from the outside the vehicle, for the case of applying the embodiment to a vehicle having a strut-type suspension. FIG. 1 shows the elements related to one of the steered wheels. Elements for other steered wheel examples may be substantially the same as in the first embodiment, with the exception of formal differences arising from left-right symmetry. As an aide to understanding FIG. 1, wheels and tires have been omitted. A drive shaft is connected to the omitted wheel.

The steering apparatus for a vehicle 100 of this embodiment has a knuckle 110 that rotatably supports the wheel via an axle bearing. The knuckle 110 has arm parts 110a, 110b that extend upwardly and downwardly.

The lower side of a strut assembly 70 (the lower end of a piston cylinder 34 of a shock absorber 30), which supports the vehicle, is connected to the arm part 110a at the upper side of the knuckle 110. The upper side of the strut assembly 70 is supported on the vehicle body via an upper support 10. The upper support 10 is provided on a suspension tower within the engine compartment. The upper end part of a piston rod of the shock absorber 30 that functions as a strut bar is supported on the upper support 10 via a resilient body such as rubber or the like. The strut assembly 70 is provided with a coil spring 40 between the upper and lower spring sheets, so as to wind around the shock absorber 30.

A location 110c (hereinafter knuckle arm part 110c) is formed that extends inside in the vehicle widthwise direction from the arm part 110b at the lower side of the knuckle 110. The knuckle arm part 110c, viewed from above, is L-shaped and is formed by a location that extends in the vehicle widthwise direction and a location that extends in the vehicle rearward direction. The knuckle arm part 110c may be a part that is separate from the knuckle 110, in which case it is joined to the knuckle 110 by a bolt or the like. In this embodiment, the knuckle 110 that includes the knuckle arm part 110c can be treated as a "wheel support member."

The steering apparatus for a vehicle 100 according to this embodiment further has a control arm 200, a linear support mechanism 300, and a tie rod 400.

The wheel-side end part 200a of the control arm 200 is swingably linked to the knuckle 110 at the swinging pivot point 202 that is provided on the knuckle arm part 110c of the knuckle 110. The mode of support at the swinging pivot point 202 may be a mode of support that substantially allows free rotation (for example, a ball joint or the like), and may also be a mode of support that allows rotation, via a resilient member (for example, a bushing).

The body-side end part 200b of the control arm 200 is swingably linked to the vehicle body at a swinging pivot point 204 provided on the vehicle body. The mode of support, in the same manner, can be implemented by a ball joint or a bushing. The swinging axis of the control arm 200 at the swinging pivot point 202 and the swinging pivot point 204 are established substantially in the up/down direction of the vehicle.

One end of the tie rod 400 is swingably linked to the knuckle arm part 110c. The other end of the tie rod 400 is connected to a rack bar (not illustrated) that extends to the left and right direction of the vehicle. The steering apparatus that includes the tie rod 400 can have an appropriate arbitrary configuration. For example, in the case of rack-and-pinion steering, when the steering wheel is turned, rotation of the pinion shaft is converted to left and right movement of the rack bar. By this left and right movement of the rack bar, the wheel is turned via the tie rod 400.

The knuckle arm part 110c is supported via the linear support mechanism 300 so as to enable linear motion or approximately linear motion in the vehicle widthwise direction. In this embodiment, the linear support mechanism 300 is a Watts link mechanism formed by two link members 302, 304 that extend in the front and rear directions of the vehicle and a third link member (linking link) that links the two link members 302, 304. One end each of the first and second link members 302, 304 is swingably linked to the vehicle body, and the other end thereof is swingably linked to the third link member 306. In the same manner, the support mode of these elements can be implemented with a ball joint or a bushing. These swinging axes are set so as to be substantially in the up/down direction of the vehicle.

The third link member 306, similar to the knuckle arm part 110c, extends in the vehicle widthwise direction. The third link member 306 is set so that the swinging pivot point 110d of the knuckle arm part 110c (that is, the swinging pivot point 1 10d of the knuckle 110) is at the linkage point between the first and second link members 302, 304. That is, the knuckle 110 is swingably supported at the swinging pivot point 110d with respect to the third link member 306 of the linear support mechanism 300. The mode of support at the swinging pivot point 110d can be implemented with a ball joint. The swinging axis of the knuckle 110 at the swinging pivot point 1 10d is set so as to be substantially in the up/down direction of the vehicle. In this case, the kingpin axis corresponds to a straight line that joins the swinging pivot point 110d that forms the center of the lower ball joint and the rotational center (resilience center) of the resilient body of the upper support 10. In the following, in order to distinguish the swinging pivot point 110d from the other swinging pivot points 202, 204 and the like, the swinging pivot point 110d will be referred to as the "lower ball joint center 110d."

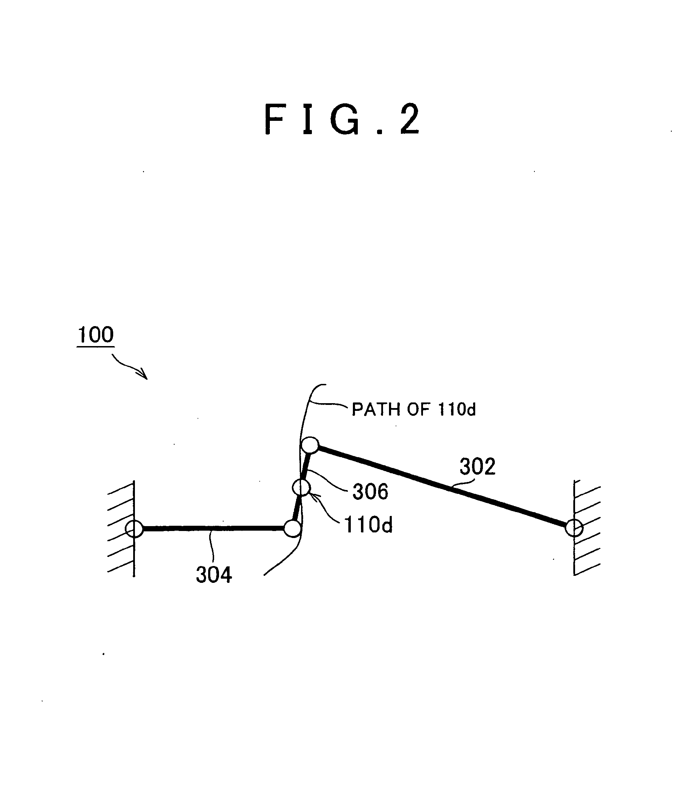

FIG. 2 is a plan view showing a simplified model of the linear support mechanism 300. FIG. 2 shows the linear support mechanism 300 in the nominal position (steering neutral position). The path of the lower ball joint center 110d accompanying movement of the linear support mechanism 300 is also shown. The path of the lower ball joint center 110d, in accordance with the Watts link mechanism, is a straight line (approximate straight line) in the region of the nominal position. In this manner, the lower ball joint center 110d is supported so as to allow approximately linear movement in the vehicle widthwise direction in accordance with the linear support mechanism 300 as Watts link mechanism. It is possible to implement the linear support mechanism 300 by various sliding mechanisms as approximately linear movement mechanisms in place of the Watts link mechanism. Alternatively, the linear support mechanism 300 can be implemented by another approximately linear movement mechanism, such as a Robert mechanism. For example, in the case of using an approximately linear movement mechanism utilizing a slider mechanism, a sliding groove is formed so as to extend in a vehicle widthwise direction in the third link member 306 or the knuckle arm part 1 10c (part extending in the vehicle widthwise direction). In doing this, it is possible to slidably support the lower ball joint 1 10d inside the sliding groove.

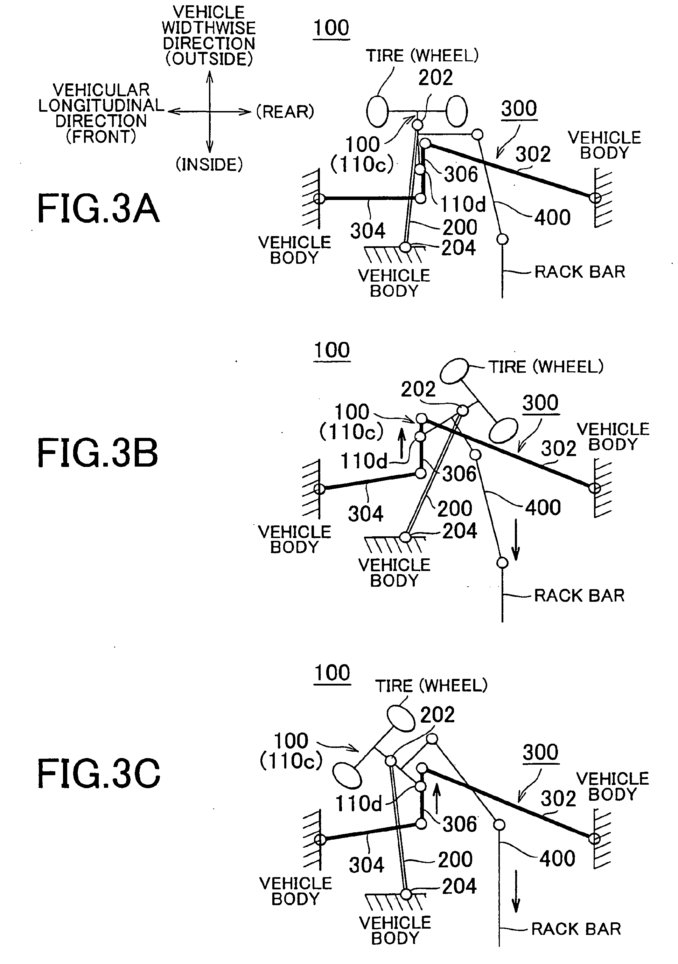

FIG. 3 is a plan view showing the movement of the steering apparatus for a vehicle 100 during steering. In FIG. 3, the main constituent elements of the steering apparatus for a vehicle 100 are shown as simplified models.

FIG. 3A shows the condition at the right wheel of the steering apparatus for a vehicle 100 in the steering neutral condition, FIG. 3B shows the condition of the right wheel of the steering apparatus for a vehicle 100 when turning right (turning outside), and FIG. 3C shows the condition of the right wheel of the steering apparatus for a vehicle 100 when turning left (turning inside).

With regard to turning right, for example, the steering wheel is operated and the rack bar (and tie rod 400) moves inward in the vehicle widthwise direction, so that as shown in FIG. 3B the knuckle arm part 110c begins to swing around the lower ball joint center 110d. Linked to the above-described movement of the tie rod 400, the control arm 200 swings toward the right around the swinging pivot point 204. When this occurs, because the knuckle arm part 110c of the knuckle 110, by the linkage with the control arm 200 via the swinging pivot point 202, is restricted in position in the vehicle widthwise direction, the knuckle arm part 110c moves toward the outside in the vehicle widthwise direction, as shown by the arrow in FIG. 3B. As a result, as shown in FIG. 3B, the knuckle arm part 110c (lower ball joint center 110d) moves linearly toward the outside in the vehicle widthwise direction via the linear support mechanism 300.

Stated differently, the linkage point (swinging pivot point 202) between the knuckle arm part 110c and the control arm 200, linked to the above-described movement of the tie rod 400, attempts to swing around both the lower ball joint center 110d and the swinging pivot point 204 on the body-side end part of the control arm 200 as pivots points. When this occurs, because the radius of swinging around the lower ball joint center 1 10d as a swinging pivot point is smaller than the radius of swinging around the swinging pivot point 204 as a swinging pivot point, the swing angle of the control arm 200 progressively increases. Accompanying this increase, the amount of pull-in toward the inside of vehicle of the linkage point of the knuckle arm part 110c by the swinging of the knuckle arm part 110c around the lower ball joint center 110d is insufficient relative to the amount of pull-in to the inside of the vehicle of the same linkage point of the knuckle arm part 110c (swinging pivot point 202) by the swinging of the control arm 200. For this reason, a force acts so as to push the lower ball joint center 1 10d of the knuckle arm part 110c toward the outside of the vehicle. As a result, the lower ball joint center 110d of the knuckle arm part 110c, as shown in FIG. 3B, moves linearly toward the outside in the vehicle widthwise direction, via the linear support mechanism 300.

In the same manner, with regard to turning left, for example, the steering wheel is operated and the tie rod 400 moves outward in the vehicle widthwise direction. Accompanying this movement, linked to the movement of the tie rod 400, the control arm 200 swings toward the left around the swinging pivot point 204. When this occurs, by the linkage of the knuckle arm part 110c with the control arm 200 via the swinging pivot point 202, the position is restricted in the vehicle widthwise direction, and the knuckle arm part 110c attempts to move toward the outside in the vehicle widthwise direction, as shown by the arrow in FIG. 3C. As a result, as shown in FIG. 3C, the knuckle arm part 110c (lower ball joint center 110d) moves linearly toward the outside in the vehicle widthwise direction via the linear support mechanism 300.

Thus, according to this embodiment it is possible to cause linear movement of the lower ball joint center 110d toward the outside in the vehicle widthwise direction, linked to the movement of the steering apparatus when steering is performed. That is, it is possible to move the kingpin axis toward the outside of the vehicle in accordance with the steering angle. By doing this, it is possible to increase the tire turning angle, while preventing interference between the tire and side members (wheel housing) when steering.

In this embodiment, because it is possible to cause linear movement of the lower ball joint center 110d by using the linear support mechanism 300, no significant difference occurs in the tire turning angle because of the difference in the steering direction.

In this embodiment, as shown in FIG. 3A, the three points of the linkage point between the knuckle arm part 110c with the control arm 200 (swinging pivot point 202), the lower ball joint center 110d, and the swinging pivot point 204 of the body-side end part of the control arm 200 are disposed substantially on a straight line when viewed from above. Because of this it is possible to cause the lower ball joint center 110d to move linearly toward the outside in the vehicle widthwise direction in substantially the same manner for both right turning and left turning. By doing this, no significant difference occurs for the kingpin axis in the amount of movement toward the outside in the vehicle widthwise direction because of a difference in the steering direction and, as a result, it is possible to achieve the maximum tiring turning angle that is equivalent for both left turning and right turning.

According to this embodiment, as described above, accompanying an increase in the steering angle, there is a progressive increase in the swing angle of the control arm 200. Accompanying this increase, the amount of pull-in toward the inside of vehicle of the linkage point of the knuckle arm part 110c by the swinging of the knuckle arm 110c around the lower ball joint center 110d is insufficient relative to the amount of pull-in toward the inside of the vehicle of linkage point of the knuckle arm part 110c (swinging pivot point 202) by the swinging of the control arm 200. For this reason, a force acts so as to push the lower ball joint center 110d of the knuckle arm part 110c toward the outside of the vehicle. This force act to assist the swinging of the knuckle arm part 110c around the lower ball joint center 110d, thereby enabling a reduction in the steering force over a large steering angle region.

In this embodiment, although the linkage point of the knuckle 110 with the control arm 200 (swinging pivot point 202) is set on the knuckle arm part 110c, as long as it is set farther to the outside in the vehicle widthwise direction than the lower ball joint center 110d, it can be set on any part of the knuckle 110.

In this embodiment, although the tie rod 400 is connected behind the wheel in the vehicular longitudinal direction, the tie rod 400 may alternatively be connected in front of the wheel in the vehicular longitudinal direction. Also, the tie rod 400 may be connected to the knuckle 110 (knuckle arm part 110c) via the control arm 200. That is, the tie rod 400 may be linked to the center part or the like of the control arm 200, so that, linked to the movement of the tie rod 400, the control arm 200 is caused to swing around the swinging pivot point 204. In this case as well, accompanying the swinging of the control arm 200 around the swinging pivot point 204, the knuckle arm part 1 10c swings around the lower ball joint center 1 10d (is also steered), and the lower ball joint center 1 10d is moved linearly toward the outside of the vehicle (that is, the kingpin axis is moved toward the outside of the vehicle).

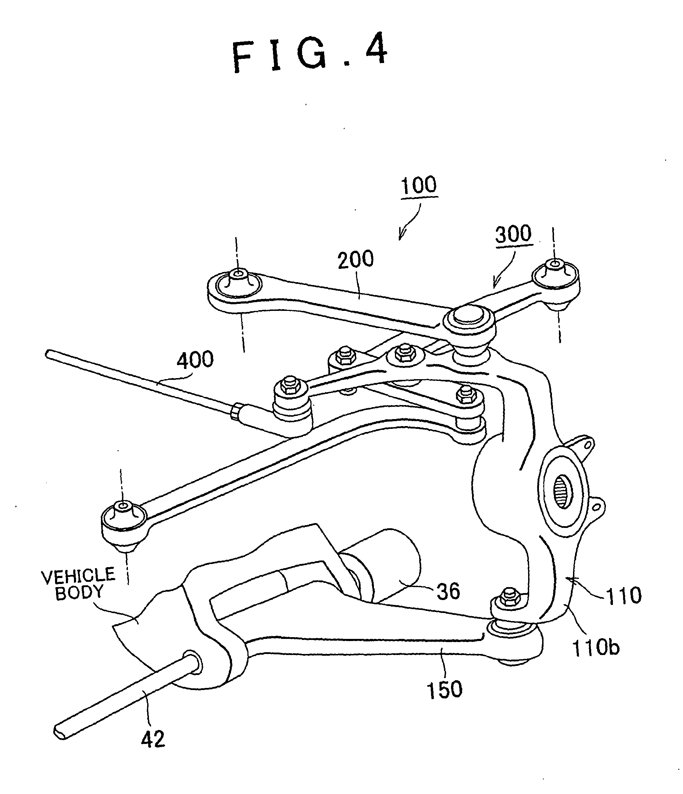

In the steering apparatus for a vehicle according to this embodiment, the above-described elements may be disposed on the upper side, and the suspension apparatus may be disposed on the lower side (that is, a top-to-bottom inversion may be done). For example, in the variation shown in FIG. 4, the arm part 110b on the lower side of the knuckle 110 is swingably linked to the vehicle body (frame or the like) via the lower arm 150. The swinging axis of the lower arm 150 is formed by a torsion bar 42, and a rotary damper 36 (for example, an electromagnetic absorber) is connected to the swinging axis of the lower arm 150. In this variation, shock when the wheels move upward and downward (when bounding and rebounding) is softened by the action of the resilient force of the torsion bar 42 accompanying undulation in the upward and downward directions of the lower arm 150, and the attenuating force of the rotary damper 36.

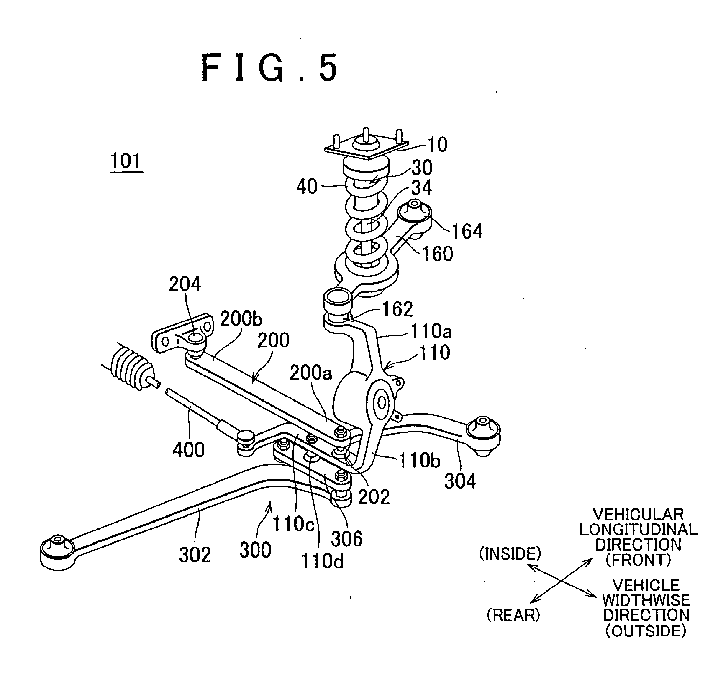

FIG. 5 is an oblique view showing a steering apparatus for a vehicle according to a second embodiment of the present invention, viewed from outside the vehicle, in the condition in which the steering apparatus is applied to a vehicle having a double-wishbone suspension. FIG. 5 shows the elements related to one of the steered wheels. Elements for other steered wheel examples may be substantially the same as in the second embodiment, with the exception of formal differences arising from left-right symmetry. As an aide to understanding FIG. 5, wheels and tires have been omitted. A drive shaft is connected to the omitted wheel.

The main feature of the steering apparatus for a vehicle 101 of this embodiment is the constitution of the upper arm 160. Other elements (in particular the lower-side elements) can be similar to the elements of the above-described first embodiment. The same reference numerals are applied to those elements, and their descriptions have been omitted.

The wheel-side end part of the upper arm 160 is swingably linked to the knuckle 110 at the swinging pivot point 162 set on the arm part 110a on the upper side of the knuckle 110. The mode of support at the swinging pivot point 162 may be implemented with a ball joint.

The body-side end part of the upper arm 160 is swingably linked to the vehicle body at the swinging pivot point 164 set on the vehicle body. The mode of support at the swinging pivot point 164 may be implemented, in the same manner, by a ball joint, or by a bushing. The swinging axis of the upper arm 160 at the swinging pivot point 162 and the swinging pivot point 164 is established substantially in the up/down direction of the vehicle. That is, the upper arm 160, similar to the control arm 200, is configured so as to be able to swing (undulate) in a substantially horizontal plane.

The lower end of the piston cylinder 34 of the shock absorber 30 is connected to the center part of the upper arm 160. A coil spring 40 is provided between the upper and lower spring sheets, so as to wind around the shock absorber 30.

The upper arm 160 in this embodiment is disposed so as to swing in the vehicular frontal direction when the knuckle 110 (knuckle arm part 110c) as described above moves linearly via the linear support mechanism 300 to the outside in the vehicle widthwise direction. That is, as described above, linked to the movement of the tie rod 400 during steering, when the knuckle 110 (knuckle arm part 110c) moves linearly toward the outside in the vehicle widthwise direction via the linear support mechanism 300, linked to the movement of the knuckle 110, the upper arm 160 that supports the upper part of the knuckle 110 is pushed outward to the outside in the vehicle widthwise direction. When this occurs, the upper arm 160 in this embodiment swings in the vehicular frontward direction, so as to absorb the above-described movement of the knuckle 110.

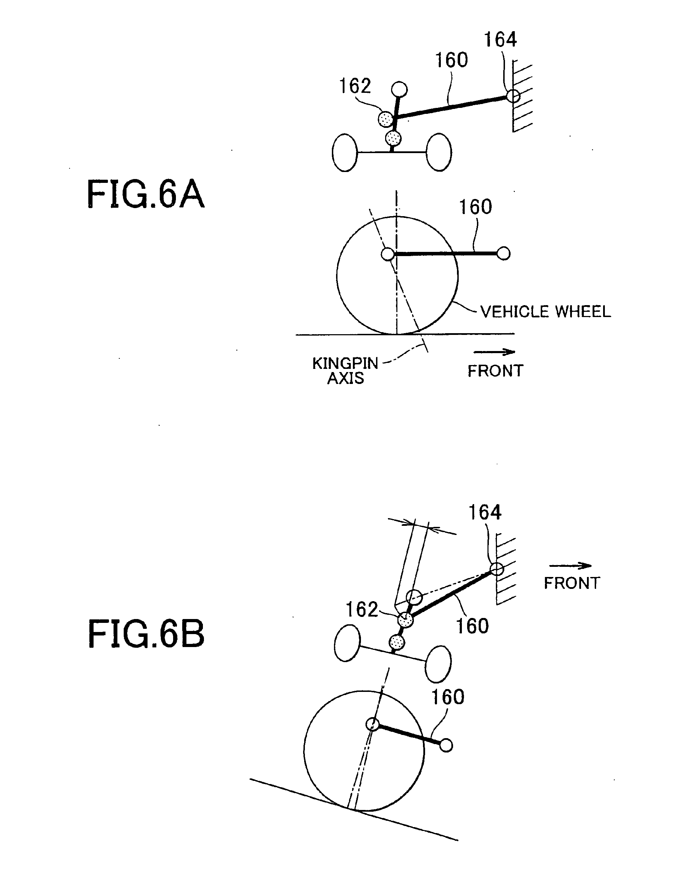

FIG. 6 is a drawing showing the operation during steering of the steering apparatus for a vehicle according to this embodiment. FIG. 6 will be referred in describing the action of the upper arm 160. For this reason, the lower-side elements (control arm 200 and linear support mechanism 300 and the like) are omitted from the drawing.

FIG. 6A shows an upper view (upper side) and a side view (lower side) of the condition of the steering apparatus for a vehicle 101 when in the steering neutral condition, in the form of simplified models, and FIG. 6B shows an upper view (upper side) and a side view (lower side) of the condition of the steering apparatus for a vehicle 101 when turning right (turning outside).

In this example, as shown in FIG. 6A, the kingpin axis that joins the swinging pivot point 162 and the lower ball joint center 110d is in the usual condition, when viewed from side, in which it is inclined so that the upper side thereof is toward the rear of the vehicle. That is, it has a positive caster angle.

When steering is done (and similarly for the case of turning left), as described above, because the linkage point (swinging pivot point 162) between the upper arm 160 and the knuckle 110, as shown in the upper view of FIG. 6B, swings in the frontal direction of the vehicle (the condition before swinging indicated by the double-dot dashed line), the inclination of the kingpin axis changes to the standing up direction (the caster standing up). That is, the caster angle (and because of this, the caster trail) becomes small.

According to this embodiment as described above, linked with the operation of the steering apparatus when steering is performed, the inclination of the kingpin axis is caused to change, and with the increase in the steering angle, the caster trail can be made small. By doing this, in the region of steering angle in which the caster trail is small, the frictional force (resistance) of the tire with respect to the road surface becomes small, and it is possible to reduce the amount of steering force required for turning.

Although in this embodiment the caster trail is made small by the upper arm 160, in a top-to-bottom inverted configuration it is possible to reduce the caster trail by the same concept using the lower arm. In this case, for a configuration having a positive caster angle, the lower arm may be disposed so that when the knuckle 110 (knuckle arm part 110c) moves via the linear support mechanism 300 linearly toward the outside in the vehicle widthwise direction, the knuckle 110 swings towards the rear of the vehicle.

Although this embodiment is the example of application to a wheel having a double-wishbone suspension, the same type of application can be done to a vehicle having a different type of suspension. For example, application can be made to a wheel having a strut-type suspension such as shown in FIG. 1. In this case, for example, if the configuration is one having a positive caster angle, the configuration is made such that the knuckle 110 (knuckle arm part 110c) can move approximately linearly diagonally, via the linear support mechanism 300, toward the rear of the vehicle toward the outside in the vehicle widthwise direction. In this case, as described above, linked to the movement of the steering mechanism during steering, because the lower ball joint center 110d moves toward the rear of the vehicle, the inclination of the kingpin axis during steering is changed to the standing up direction. Also, this type of configuration (that is, a configuration in which the lower ball joint center 110d is caused to move linearly toward the inclined rear of the vehicle), can be applied to a double-wishbone suspension as well.

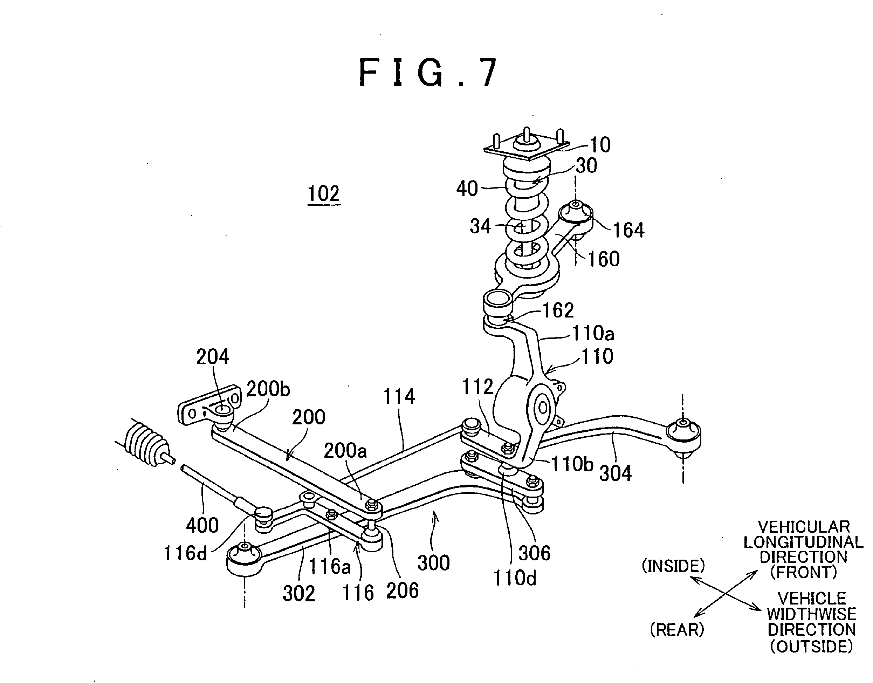

FIG. 7 is an oblique view showing a steering apparatus for a vehicle according to the third embodiment of the present invention, viewed from the outside of the vehicle, in the condition in which the steering apparatus is applied to a vehicle having a double-wishbone suspension. The steering apparatus for a vehicle 102 according to this embodiment, similar to the elements of the above-described first embodiment, can be applied to a vehicle having any type of suspension.

The steering apparatus for a vehicle 102 according to this embodiment can have upper-side elements that are the same as the above-described second embodiment. The lower-side elements are described below.

As shown in FIG. 7, the a location 112 extending to the inside in the vehicle widthwise direction (called the knuckle lower part 112) is formed on the arm part 110b at the lower side of the knuckle 110. The end part on the inside in vehicle widthwise direction in the knuckle lower part 112 is swingably linked to a linking link 114. The linking link 114 extends in the vehicular longitudinal direction. The linking link 114 links between the knuckle lower part 112 and the knuckle arm 116, which is disposed with a relatively large offset toward the rear of the vehicle. That is, the end part of the linking link 114 on the vehicle rear side is swingably linked to the knuckle arm 116, which is disposed with an offset towards the vehicle rear side. In this embodiment, the knuckle 110, which includes the knuckle lower part 112, the knuckle arm 116, and the linking link 114, corresponds to the "wheel support member" in the attached claims.

The steering apparatus for a vehicle 102 according to this embodiment further has a control arm 200, a linear support mechanism 300, and a tie rod 400.

The wheel-side end part 200a of the control arm 200 is swingably linked to the knuckle arm 116 at the swinging pivot point 206 provided on the knuckle arm 116. The mode of support at the swinging pivot point 206 may be implemented by a ball joint or by a bushing.

The body-side end part 200b of the control arm 200 is swingably linked to the vehicle body at the swinging pivot point 204 set on the vehicle body. The mode of support at the swinging pivot point 204 may be implemented, in the same manner, by a ball joint or by a bushing. The swinging axis of the control arm 200 at the swinging pivot point 206 and the swinging pivot point 204 are established substantially in the up/down direction of the vehicle.

One end of the tie rod 400 is swingably linked to the knuckle arm 116 at the swinging pivot point 116d. The other end of the tie rod 400 is connected to a rack bar (not illustrated) that extends toward the left and right of the vehicle. The steering apparatus that includes the tie rod 400 can have an appropriate arbitrary configuration.

In the example shown in FIG. 7, the knuckle arm 116 viewed from above, is L-shaped and is formed by a location that extends in the vehicle widthwise direction and a location that extends in the vehicle rearward direction. The knuckle arm 116 is provided on the bent portion with a linkage point to the linking link 114. A linkage point (swinging pivot point 206) with the control arm 200 is provide on the outside end in the vehicle widthwise direction. Also, a linkage point (swinging pivot point 116d) with the tie rod 400 is provided on the end part in the rear side of the vehicular longitudinal direction.

The knuckle lower part 112, is supported so as to enable linear movement or approximately linear movement in the vehicle widthwise direction, via the linear support mechanism 300. In the example illustrated, the linear support mechanism 300 is a Watts link mechanism formed by the two link members 302, 304, which extend in the vehicular longitudinal direction, and the third link member (linking link) 306, which links these link members. The first and second link members 302, 304 each have one end that is swingably linked to the vehicle body, and another end that is swingably linked to the third link member 306. In the same manner, the mode of swingable support of these elements may be implemented by a ball joint or a by a bushing. The swinging axes are established to be substantially in the up/down direction of the vehicle.

The third link member 306, similar to the knuckle lower part 112 of the knuckle 110, extends in the vehicle widthwise direction. The third link member 306 is provided with a swinging pivot point 110d (lower ball joint center 110d) of the knuckle lower part 112 between the first and second link members 302, 304. That is, the knuckle 110 is swingably supported at the lower ball joint center 110d with respect to the third link member 306 of the linear support mechanism 300. The swinging axis of the lower ball joint center 110d is established to be substantially in the up/down direction of the vehicle. In this case, the kingpin axis corresponds to a straight line that joins the lower ball joint center 110d and the upper ball joint center (swinging pivot point 162).

The first link member 302 is provided with a swinging pivot point 116a of the knuckle arm 116, between the two linkage points, the linkage point with the third link member 306 and the linkage point with the vehicle body. That is, the knuckle arm 116 is swingably supported at the swinging pivot point 116a with respect to the first link member 302 of the linear support mechanism 300. The mode of support at the swinging pivot point 116a, in the same manner, may be implemented by a ball joint or by a bushing.

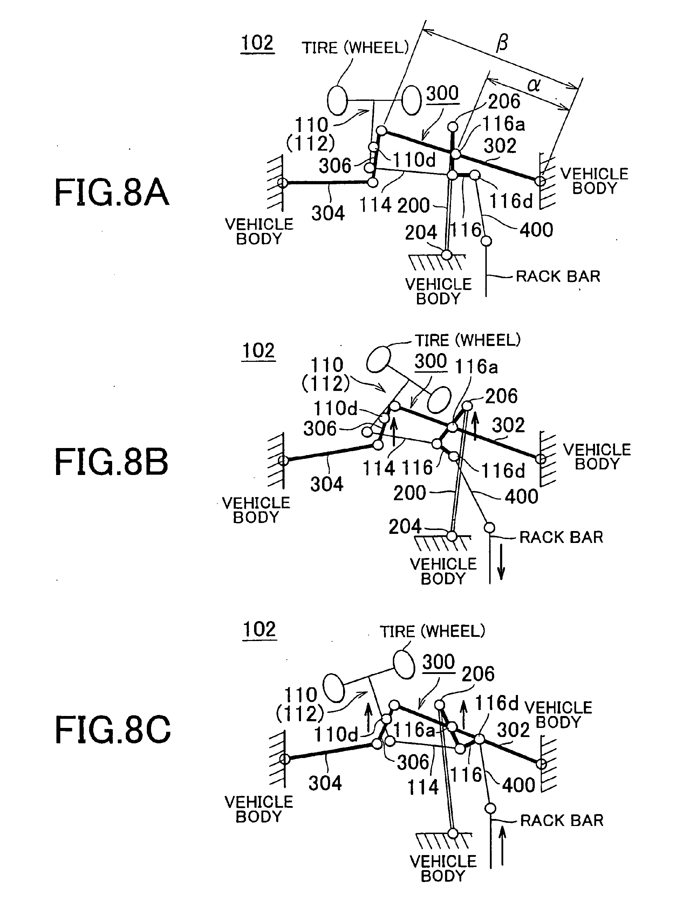

FIG. 8 is a plan view showing the movement that is achieved during steering by the steering apparatus for a vehicle 102 according to the third embodiment. In FIG. 8, the main constituent elements of the steering apparatus for a vehicle 102 are indicated by simple models.

FIG. 8A shows the condition of the steering apparatus for a vehicle 102 at the right wheel when in the steering angle neutral condition, FIG. 8B shows the condition of the steering apparatus for a vehicle 102 at the right wheel when turning right (turning outside), and FIG. 8C shows the condition of the steering apparatus for a vehicle 102 at the right wheel when turning left (turning inside).

With regard to turning right, for example, the steering wheel is operated and the rack bar (and tie rod 400) move inward in the vehicle widthwise direction, so that as shown in FIG. 8B the knuckle arm 116 begins to swing around the swinging pivot point 116a. In accordance with this, the knuckle lower part 112 begins to swing around the lower ball joint center 110d. Linked to the above-described movement of the tie rod 400, the control arm 200 swings to the right around the swinging pivot point 204. When this occurs, the swinging pivot point 116a of the knuckle arm 116, by the linkage with the control arm 200 via the swinging pivot point 206, is restricted to the position in the vehicle widthwise direction. For this reason, the swinging pivot point 116a, as shown by the arrow in FIG. 8B, attempts to move to the outside in the vehicle widthwise direction. Because of this, the first link member 302 swings toward the outside in the vehicle widthwise direction. Accompanying this swinging, the knuckle lower part 112 (lower ball joint center 110d) moves linearly to the outside in the vehicle widthwise direction.

Stated differently, the linkage point of the knuckle arm 116 with the control arm 200 (swinging pivot point 206), linked to the above-described movement of the tie rod 400, attempts to swing around both the swinging pivot point 116a with respect to the first link member 302 and the swinging pivot point 204 with respect to the body-side end part of the control arm 200. When this occurs, because the radius of swinging around swinging pivot point 116a as a swinging pivot point is smaller than the radius of swinging around the swinging pivot point 204 as a swinging pivot point, the swing angle of the control arm 200 progressively increases. Accompanying this increase, the amount of pull-in toward the inside of vehicle of the swinging pivot point 206 by the swinging of the knuckle arm part 116 around the swinging pivot point 116a is insufficient relative to the amount of pull-in to the inside of the vehicle of the swinging pivot point 206 by the swinging of the control arm 200. Accompanying this insufficiency, a force acts so as to push the swinging pivot point 116a of the knuckle arm 116 toward the outside of the vehicle. As a result, the swinging pivot point 116a of the knuckle arm 116 attempts to move to the outside in the vehicle widthwise direction. As a result, the first link member 302 swings toward the outside in the vehicle widthwise direction and the linear support mechanism 300 operates. Accompanying this operation, the knuckle lower part 112 (lower ball joint center 110d) of the knuckle 110 moves linearly toward the outside in the vehicle widthwise direction.

In the same manner, for example, in the case of turning left, when the steering wheel is operated, and the tie rod 400 moves to the outside in the vehicle widthwise direction, linked to the movement of the tie rod 400 the control arm 200 swings leftward around the swinging pivot point 204. Because the knuckle arm 116, by the linkage with the control arm 200 via the swinging pivot point 206, is restricted in position in the vehicle widthwise direction, the knuckle arm 116 attempts to move to the outside in the vehicle widthwise direction, as shown by the arrow in FIG. 8C. By doing this, the first link member 302 swings to the outside in the vehicle widthwise direction, and accompanying this swinging the knuckle lower part 112 of the knuckle 110 (lower ball joint center 110d) moves linearly to the outside in the vehicle widthwise direction.

According to this embodiment, therefore, similar to the case of the above-described first embodiment, it is possible to cause the lower ball joint center 1 10d to move linearly outward in the vehicle widthwise direction, linked to the movement of the steering mechanism during steering. That is, it is possible to cause the kingpin axis to move to the outside of the vehicle responsive to the steering angle. By doing this, it is possible to increase the tire turning angle, while preventing interference between the tire and side members (wheel housing) during steering. In this embodiment, because it is possible by using the linear support mechanism 300 to cause the lower ball joint center 1 10d to move linearly, the occurrence of a significant difference in the tire turning angle due to the difference in the steering direction is eliminated.

In this embodiment, as shown in FIG. 7, by linking the knuckle arm part 116 by the linking link 114, it is possible to position the control arm 200 and tie rod 400 so as to be offset from the wheel center, so that it is possible to establish a relative large free space around the wheel. By doing this, it is easy, for example, to provide a drive shaft or motor (for electrical motor drive) within the wheel.

In the present invention, the swinging pivot point 206 at the wheel-side end part of the control arm 200 is provided on the first link member 302 of the linear support mechanism 300, via the knuckle arm 116. For this reason, compared to the above-described first embodiment, in which the rotating pivot point at the wheel-side end part of the control arm 200 is provided on the third link member 306, it is possible to make the amount of movement of the lower ball joint center 110d (amount of movement toward the outside in the vehicle widthwise direction) large with respect to the amount of swinging of the control arm 200 (rack stroke amount). That is, it is possible to make the amount of movement of the lower ball joint center 110d with respect to the amount of swinging of the control arm 200 increase (multiply) by the line segment ration β/α (refer to FIG. 8A) in accordance with the position of the swinging pivot point 116a at the first link member 302. By doing this, it is possible with a smaller rack stroke to efficiently cause linear motion of the lower ball joint center 110d toward the outside in the vehicle widthwise direction.

In this embodiment, as shown in FIG. 8A, the three points of the linkage point between the knuckle arm 116 and the control arm 200 (swinging pivot point 206), the swinging pivot point 116a of the knuckle arm 116 with respect to the first link member 302, and the swinging pivot point 204 of the body-side end part of the control arm 200 are disposed substantially on a straight line when viewed from above. Because of this it is possible to cause the swinging pivot point 116a and the lower ball joint center 1 10d, accompanying the swinging of the knuckle arm 116, to move linearly toward the outside in the vehicle widthwise direction in substantially the same manner for both right turning and left turning. By doing this, no significant difference occurs for the kingpin axis in the amount of movement toward the outside in the vehicle widthwise direction because of a difference in the steering direction and, as a result, it is possible to achieve the maximum tiring turning angle that is equivalent for both left turning and right turning.

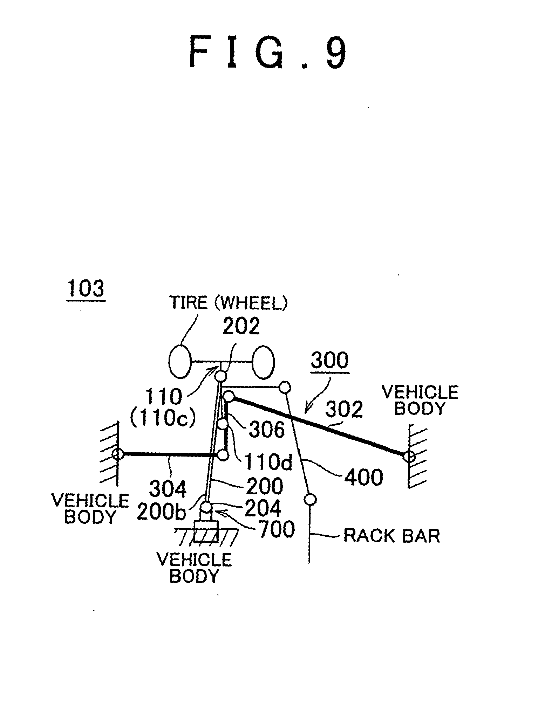

FIG. 9 is a simplified plan view showing a simplified model of the steering apparatus for a vehicle according to the fourth embodiment of the present invention. The steering apparatus for a vehicle 103 of this embodiment differs from the steering apparatus for a vehicle 100 according to the first embodiment in that an actuator 700 is provided at the body-side end part 200b of the control arm 200. Other elements may be the same as in the above-described first embodiment. The actuator 700 acts to move the swinging pivot point 204 (body-side end part 200b) of the control arm 200 in the vehicular longitudinal direction. The operation of the actuator 700 is controlled by a controller (not illustrated).

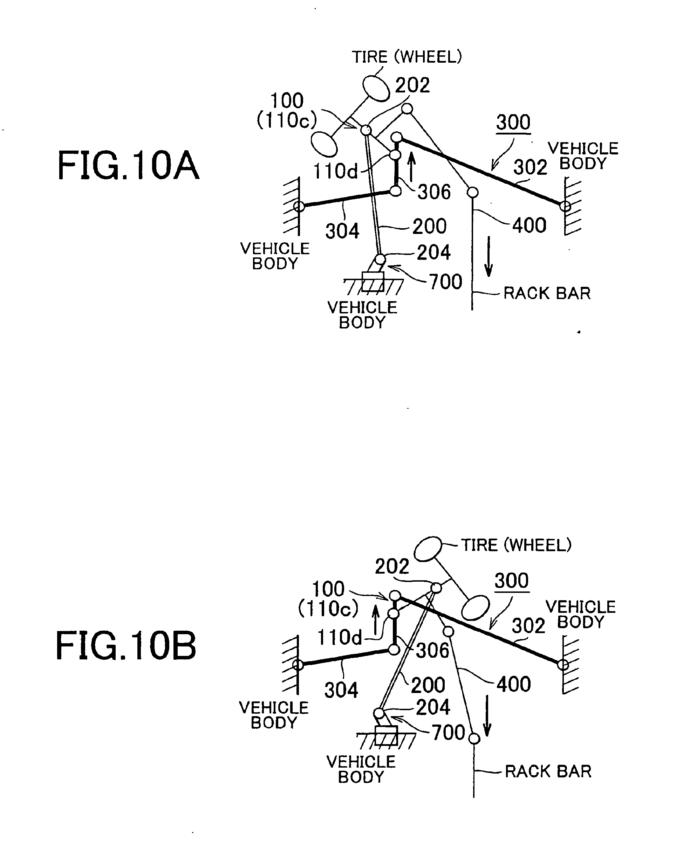

FIG. 10 is a plan view showing the operation during steering by the steering apparatus for a vehicle according to the fourth embodiment, in which FIG. 10A shows the condition of the steering apparatus for a vehicle 103 when turning left (turning inside) and FIG. 10B shows the condition of the steering apparatus 103 when turning right (turning outside).

When turning left, by the operation of the actuator 700 the swinging pivot point 204 of the control arm 200, as shown by the arrow in FIG. 10A, moves toward the rear of the vehicle (rack bar side). When the swinging pivot point 204 of the control arm 200 moves toward the rear of the vehicle, the swinging pivot point 202 (linkage point between the knuckle arm part 110c of the knuckle 110 and the control arm 200) is pulled into the inside in the vehicle widthwise direction. By doing this, because the steering angle is increased, it is possible to make the tire turning angle large when turning left.

In the same manner, when turning right, by the operation of the actuator 700 the swinging pivot point 204 of the control arm 200, as shown by the arrow in FIG. 10B, moves toward the front of the vehicle. When the swinging pivot point 204 of the control arm 200 moves toward the front of the vehicle, the swinging pivot point 202 (linkage point between the knuckle arm part 110c of the knuckle 110 and the control arm 200) is pulled into the inside in the vehicle widthwise direction. By doing this, because the steering angle is increased, it is possible to make the tire turning angle large when turning right.

Although the foregoing have been descriptions of preferred embodiments of the present invention, the present invention is not restricted to the above-described embodiment, and can take on various forms and have replacements added thereto, without going outside the scope of the present invention as defined in the appended claims.

For example, although in the above-described embodiments the lower ball joint center 110d is configured so as to be able to move, via the linear support mechanism 300, linearly or approximately linearly in a direction substantially parallel to the vehicle widthwise direction, a configuration may be adopted such that linear or approximately linear movement is possible in a direction that is inclined to the vehicular longitudinal direction.

## Claims

1. A steering apparatus for a vehicle that includes
a wheel support member (110) that rotatably supports a wheel,
a steering mechanism that includes a tie rod (400) linked to the wheel support member (110), and rotates the wheel support member (110) around a first pivot point of the wheel support member (110) that forms a kingpin axis, in association with a movement of the tie rod during steering, the steering apparatus **characterized by** comprising:
a linear support mechanism (300) that includes at least two members (302, 304) supported on a vehicle body, and supports the first pivot point (110d), so as to allow linear or approximately linear movement in a vehicle width direction or in a direction inclined in a longitudinal direction of the vehicle; and
a first arm member (200), an end of which is swingably supported on the vehicle body, and an other end of which is swingably supported by the wheel support member (110) at the outside of the first pivot point (110d) in the vehicle width direction, wherein
the first arm member (200) restricts a position of the wheel support member (110) by the linear support mechanism (300), so that the first pivot point (110d) in association with the movement of the tie rod (400) moves linearly or approximately linearly, outward in the vehicle width direction.

2. The steering apparatus for the vehicle according to claim 1, wherein
the first pivot point (110d) of the wheel support member (110), viewed from above the vehicle, is disposed on a straight line substantially the same as a straight line extending from the first arm member (200), when the wheel support member (110) is located at a steering angle neutral condition.

3. The steering apparatus for the vehicle according to claim 1 or 2, wherein
the linear support mechanism (300) includes a first link member (302) and a second link member (304), that are supported on the vehicle body, and a third link member (306) that links the first link member (302) and the second link member (304), in which the first pivot point (110d) of the wheel support member (110) is disposed on the third link member (306).

4. The steering apparatus for the vehicle according to claim 1, wherein
the linear support mechanism (300) includes a first link member (302) and a second link member (304), that are supported on the vehicle body, and a third link member (306) that links the first link member (302) and the second link member (304), in which the first pivot point (110d) of the wheel support member (110) is disposed on the third link member (306), and in which a second pivot point (116a) of the wheel support member (110) is disposed on the first link member (302) or on the second link member (304), wherein
the wheel support member (110) has a first member (112) supported so as to be swingable around the first pivot point (110d) and rotatably supporting the wheel,
a second member (116) supported so as to be swingable around the second pivot point (116a) and swingably supporting the other end of the first arm member (200) at the outside of the second pivot point (116a) in the vehicle width direction, and
a third member (114) that links the first member (112) and the second member (116).

5. The steering apparatus for the vehicle according to claim 4, wherein
the second pivot point (116a), viewed from above the vehicle, is disposed on a straight line substantially the same as a straight line extending from the first arm member (200) when the wheel support member (110) is located at a steering angle neutral condition.

6. The steering apparatus for the vehicle according to any one of claims 1 to 5, wherein
an inclination of the kingpin axis changes to a vertically standing direction in association with a movement of the first pivot point of the wheel support member outward in the vehicle width direction.

7. The steering apparatus for the vehicle according to any one of claims 1 to 6, further comprising:
a second arm member (110a), an end of which is swingably supported on the vehicle body, and an other end of which is swingably linked to the wheel support member (110), wherein
a line joining the first pivot point (110d) of the wheel support member (110) and a linking point (162) of the other end of the second arm member (110a) establishes the kingpin axis,
the second arm member (1 10a) is disposed so that the inclination of the kingpin axis changes to the vertically standing direction in association with the movement of the first pivot point (110d) of the wheel support member (110).

## Patentansprüche

1. Eine Lenkvorrichtung für ein Fahrzeug, die Folgendes aufweist:
ein Radlagerteil (110), das ein Rad drehbar lagert,
einen Lenkmechanismus, der eine Spurstange (400) aufweist, die mit dem Radlagerteil (110) verbunden ist und das Radlagerteil (110) um einen ersten Schwenkpunkt des Radlagerteils (110), der eine Achsschenkelachse bildet, in Verbindung mit einer Bewegung der Spurstange während des Lenkens dreht, wobei die Lenkvorrichtung **dadurch gekennzeichnet ist, dass** sie Folgendes aufweist:
einen linearen Lagermechanismus (300), der mindestens zwei Teile (302, 304) aufweist, die sich an einer Fahrzeugkarosserie abstützen, und der den ersten Schwenkpunkt (110d) so lagert, dass er eine lineare oder nahezu lineare Bewegung in einer Breitenrichtung des Fahrzeug oder in einer Richtung schräg zu einer Längsrichtung des Fahrzeugs erlaubt; und
ein erstes Armteil (200), dessen eines Ende schwingbar an der Fahrzeugkarosserie abgestützt ist und dessen anderes Ende schwingbar an dem Radlagerteil (110) auf der Außenseite des ersten Schwenkpunkts (110d) in der Fahrzeugbreitenrichtung gelagert ist, wobei
das erste Armteil (200) eine Position des Radlagerteils (110) durch den linearen Lagermechanismus (300) so einschränkt, dass der erste Schwenkpunkt (110d) sich in Verbindung mit der Bewegung der Spurstange (400) linear oder annähernd linear in der Fahrzeugbreitenrichtung nach außen bewegt.

2. Die Lenkvorrichtung für das Fahrzeug nach Anspruch 1, wobei der erste Schwenkpunkt (110d) des Radlagerteils (110) von oberhalb des Fahrzeugs gesehen auf einer geraden Linie angeordnet ist, die im Wesentlichen die gleiche wie eine gerade Linie ist, die sich von dem ersten Armteil (200) weg erstreckt, wenn das Radlagerteil (110) unter der Bedingung eines neutralen Lenkwinkels angeordnet ist.

3. Die Lenkvorrichtung für das Fahrzeug nach Anspruch 1 oder 2, wobei der Linearlagermechanismus (300) ein erstes Verbindungsteil (302) und ein zweites Verbindungsteil (304) umfasst, die an der Fahrzeugkarosserie gelagert sind, und ein drittes Verbindungsteil (306), welches das erste Verbindungsteil (302) und das zweite Verbindungsteil (304) verbindet, wobei der erste Schwenkpunkt (110d) des Radlagerteils (110) auf dem dritten Verbindungsteil (306) angeordnet ist.

4. Die Lenkvorrichtung für das Fahrzeug nach Anspruch 1, wobei
der Linearlagermechanismus (300) ein erstes Verbindungsteil (302) und ein zweites Verbindungsteil (304) aufweist, die an der Fahrzeugkarosserie gelagert sind, und ein drittes Verbindungsteil (306), welches das erste Verbindungsteil (302) und das zweite Verbindungsteil (304) verbindet, wobei der erste Lagerpunkt (110d) des Radlagerteils (110) an dem dritten Verbindungsteil (306) angeordnet ist, und wobei ein zweiter Schwenkpunkt (116a) des Radlagerteils (110) an dem ersten Verbindungsteil (302) oder an dem zweiten Verbindungsteil (304) angeordnet ist, wobei
das Radlagerteil (110) ein erstes Teil (112) aufweist, das so gelagert ist, dass es um den ersten Schwenkpunkt (110d) schwingbar ist und das Rad drehbar lagert,
ein zweites Teil (116), das so gelagert ist, dass es um den zweiten Schwenkpunkt (116a) schwingbar ist und das andere Ende des ersten Armteils (200) auf der Außenseite des zweiten Schwenkpunkts (116a) in der Fahrzeugbreitenrichtung schwingbar lagert, und
ein drittes Teil (114), das das erste (112) und das zweite Teil (116) verbindet.

5. Die Lenkvorrichtung für das Fahrzeug nach Anspruch 4, wobei
der zweite Schwenkpunkt (116a) von oberhalb des Fahrzeugs gesehen auf einer geraden Linie angeordnet ist, die im Wesentlichen die gleiche wie eine gerade Linie ist, die sich von dem ersten Armteil (200) weg erstreckt, wenn das Radlagerteil (110) unter der Bedingung eines neutralen Lenkwinkels angeordnet ist.

6. Die Lenkvorrichtung für das Fahrzeug nach einem der Ansprüche 1 bis 5, wobei
eine Neigung der Achsschenkelachse sich in Verbindung mit einer Bewegung des ersten Schwenkpunkts des Radlagerteils in der Fahrzeugbreitenrichtung nach außen hin zu einer senkrechten Standrichtung ändert.

7. Die Lenkvorrichtung für das Fahrzeug nach einem der Ansprüche 1 bis 6, die weiterhin Folgendes aufweist:
ein zweites Armteil (110a), das ein Ende aufweist, das schwingbar an der Fahrzeugkarosserie abgestützt ist, und das ein anderes Ende aufweist, das schwingbar mit dem Radlagerteil (110) verbunden ist, wobei
eine Linie, welche den ersten Schwenkpunkt (110d) des Radlagerteils (110) und einen Verknüpfungspunkt (162) des anderen Endes des zweiten Armteils (110a) verbindet, die Achsschenkelachse bildet,
das zweite Armteil (110a) so angeordnet ist, dass die Neigung der Achsschenkelachse sich in Verbindung mit der Bewegung des ersten Schwenkpunkts (110d) des Radlagerteils (110) hin zu der senkrechte Standrichtung ändert.

## Revendications

1. Appareil de direction pour un véhicule, comprenant :
un élément de support de roue (110) qui supporte de manière rotative une roue,
un mécanisme de direction qui comprend une biellette de direction (400) reliée à l'élément de support de roue (110), et fait tourner l'élément de support de roue (110) autour d'un premier point de pivot de l'élément de support de roue (110) qui forme un axe de pivot d'attelage, en association avec un mouvement de la biellette de direction pendant la direction, l'appareil de direction étant **caractérisé en ce qu'**il comprend :
un mécanisme de support linéaire (300) qui comprend au moins deux éléments (302, 304) supportés sur un corps de véhicule, et supporte le premier point de pivot (110d), afin de permettre le mouvement linéaire ou approximativement linéaire dans le sens de la largeur du véhicule ou dans une direction inclinée dans une direction longitudinale du véhicule ; et
un premier élément de bras (200), dont une extrémité est supportée de manière oscillante sur le corps de véhicule, et dont l'autre extrémité est supportée de manière oscillante par l'élément de support de roue (110) à l'extérieur du premier de pivot (110d) dans le sens de la largeur du véhicule, dans lequel :
le premier élément de bras (200) limite une position de l'élément de support de roue (110) par le mécanisme de support linéaire (300), de sorte que le premier point de pivot (110d) en association avec le mouvement de la biellette de direction (400) se déplace de manière linéaire ou approximativement linéaire vers l'extérieur dans le sens de la largeur du véhicule.

2. Appareil de direction pour le véhicule selon la revendication 1, dans lequel le premier point de pivot (110d) de l'élément de support de roue (110), observé à partir du dessus du véhicule, est disposé sur une ligne droite sensiblement identique à une ligne droite s'étendant à partir du premier élément de bras (200), lorsque l'élément de support de roue (110) est situé dans une condition neutre d'angle de braquage.

3. Appareil de direction pour le véhicule selon la revendication 1 ou 2, dans lequel le mécanisme de support linéaire (300) comprend un premier élément de liaison (302) et un deuxième élément de liaison (304), qui sont supportés sur le corps de véhicule, et un troisième élément de liaison (306) qui relie le premier élément de liaison (302) et le deuxième élément de liaison (304), dans lequel le premier point de pivot (110d) de l'élément de support de roue (110) est disposé sur le troisième élément de liaison (306).

4. Appareil de direction pour le véhicule selon la revendication 1, dans lequel le mécanisme de support linéaire (300) comprend un premier élément de liaison (302) et un deuxième élément de liaison (304), qui sont supportés sur le corps de véhicule, et un troisième élément de liaison (306) qui relie le premier élément de liaison (302) et le second élément de liaison (304), dans lequel le premier point de pivot (110d) de l'élément de support de roue (110) est disposé sur le troisième élément de liaison (306), et dans lequel un deuxième point de pivot (116a) de l'élément de support de roue (110) est disposé sur le premier élément de liaison (302) ou sur le deuxième élément de liaison (304), dans lequel :
l'élément de support de roue (110) a un premier élément (112) supporté afin de pouvoir osciller autour du premier point de pivot (110d) et supportant de manière rotative la roue,
un deuxième élément (116) supporté afin de pouvoir osciller autour du deuxième point de pivot (116a) et supportant de manière oscillante l'autre extrémité du premier élément de bras (200) à l'extérieur du deuxième point de pivot (116a) dans le sens de la largeur du véhicule, et
un troisième élément (114) qui relie le premier élément (112) et le deuxième élément (116).

5. Appareil de direction pour le véhicule selon la revendication 4, dans lequel :
le deuxième point de pivot (116a), observé à partir du dessus du véhicule, est disposé sur une ligne droite sensiblement identique à une ligne droite s'étendant à partir du premier élément de bras (200) lorsque l'élément de support de roue (110) est positionné selon une condition neutre d'angle de braquage.

6. Appareil de direction pour le véhicule selon l'une quelconque des revendications 1 à 5, dans lequel :
une inclinaison de l'axe de pivot d'attelage change par rapport à une direction verticale en association avec un mouvement du premier point de pivot de l'élément de support de roue vers l'extérieur dans le sens de la largeur du véhicule.

7. Appareil de direction pour le véhicule selon l'une quelconque des revendications 1 à 6, comprenant en outre :
un second élément de bras (110a) dont une extrémité est supportée de manière oscillante sur le corps de véhicule, et dont une autre extrémité est reliée de manière oscillante à l'élément de support de roue (110), dans lequel :
une conduite assemblant le premier point de pivot (110d) de l'élément de support de roue (110) et un point de liaison (162) de l'autre extrémité du second élément de bras (110a) établit l'axe du pivot d'attelage,
le second élément de bras (110a) est disposé de sorte que l'inclinaison de l'axe du pivot d'attelage change par rapport à la direction verticale en association avec le mouvement du premier point de pivot (110d) de l'élément de support de roue (110).
